# EUROPÄISCHE PATENTSCHRIFT

(11) **EP 2 164 747 B1**
(45) Veröffentlichungstag und Bekanntmachung des Hinweises auf die Patenterteilung: **02.08.2017**
(21) Anmeldenummer: 08758844.8
(22) Anmeldetag: 29.05.2008
(51) Int. Cl.: B62D 21/15, B62D 25/20, B62D 33/06, B62D 47/02

(54) **SITZTRÄGERANORDNUNG UND AUFBAU FÜR EINEN OMNIBUS**
SEAT CARRIER ARRANGEMENT AND CONSTRUCTION FOR A BUS
DISPOSITIF DE SUPPORT DE SIÈGE ET CONSTRUCTION POUR UN OMNIBUS

(30) Priorität: 12.06.2007 DE 102007026951
(43) Veröffentlichungstag der Anmeldung: 24.03.2010
(73) Patentinhaber: Daimler AG, 70327 Stuttgart (DE)
(72) Erfinder: MOENNICH, Thomas, 89160 Dornstadt (DE); STEINMETZ, Gregor, 70563 Stuttgart (DE)
(74) Vertreter: JENSEN & SON
(86) Internationale Anmeldenummer: PCT/EP2008/004261
(87) Internationale Veröffentlichungsnummer: WO 2008/151718

(56) Entgegenhaltungen:
- WO-A-2005/102825
- WO-A-2008/047749
- JP-A- 10 236 342
- JP-A- 10 297 537
- JP-A- 11 170 942

## Beschreibung

Die Erfindung betrifft eine Sitzträgeranordnung für einen Fahrzeugsitz eines Omnibusses der im Oberbegriff des Patentanspruchs 1 angegebenen Art. Darüber hinaus betrifft die Erfindung einen Aufbau für einen Omnibus, der in den Oberbegriffen des Patentanspruchs 5 angegebenen Art.

Nutzfahrzeuge in Frontlenkerbauweise oder Kraftomnibusse heutiger Bauart zeichnen sich dadurch aus, dass die vorderen Fahrzeugsitze - beispielsweise ein Fahrer- oder Beifahrersitz - unmittelbar hinter einer vorderen Stirnwand des Aufbaus angeordnet sind. Dies birgt prinzipiell die Gefahr, dass im Falle eines Frontalaufpralls des Nutzfahrzeugs bzw. des Omnibusses der Überlebensraum für den Fahrer bzw. Beifahrer in Folge einer gegebenenfalls erfolgenden Intrusion der vorderen Stirnwand beeinträchtigt bzw. verkleinert werden kann. Für den Fahrer entsteht darüber hinaus die Problematik, dass mit der Stirnwandintrusion auch eine Verschiebung des Lenkrads entgegen der Vorwärtsfahrtrichtung erfolgen kann, was eine zusätzliche Verletzungsgefahr mit sich bringt.

Aus diesem Grund sind seit geraumer Zeit Maßnahmen zur Erhöhung der passiven Sicherheit insbesondere bei einem Frontalaufprall bekannt, um einer hinter der vorderen Stirnwand des Nutzfahrzeugs bzw. des Omnibusses positionierten Person einen hinreichenden Überlebensraum gewährleisten zu können. Dabei ergibt sich die grundsätzliche Problematik, dass einerseits eine relativ steife Struktur im vorderen Bereich des Fahrzeugs geschaffen werden kann, wobei bei dieser Erhöhung der Steifigkeit jedoch zu berücksichtigen ist, dass die Sitzinsassen nicht mit einer übermäßigen unfallbedingten Beschleunigung beaufschlagt werden, welche sich wiederum - beispielsweise durch die sogenannten Peitscheneffekte - in einem erhöhten Verletzungsrisiko niederschlagen würde.

Ein prinzipieller Ansatz zur Lösung der gesamten Problematik ist beispielsweise bereits aus der DE 28 53 621 A1 als bekannt zu entnehmen, welche eine Sitzträgeranordnung in einem Nutzfahrzeug zeigt, bei welcher ein Sitzträger nach hinten hin an einem energieabsorbierenden Deformationselement abgestützt ist. Wird nun eine vordere Stoßstange des Nutzfahrzeugs in Folge eines Frontalaufpralls mit einer unfallbedingten Kraft beaufschlagt, so wird zunächst ein Teil der Unfallkraft durch ein Deformationselement zwischen der Stoßstange und dem vorderen Ende des Sitzträgers verzehrt. Der Sitzträger selber ist unter Vermittlung von Abreißelementen an Gleitschienen des Fahrgestells festgelegt. Nachdem das vordere Deformationselement vollständig aufgezehrt worden ist, reißen im weiteren Verlauf des Frontalaufpralls die Abreißelemente entsprechend vom Fahrzeugrahmen ab, so dass der Sitzträger entlang der Gleitschienen entgegen der Vorwärtsfahrtrichtung geschoben werden kann. Diese Verschiebebewegung erfolgt unter Absorption von Energie mittels des hinter dem Sitzkissenträgers angeordneten weiteren Deformationselements.

Als problematisch bei dieser Sitzträgeranordnung ist jedoch der Umstand anzusehen, dass diese äußerst aufwendig aufgebaut ist. Ein weiterer Nachteil ist es, dass der Sitzträger oberhalb des Fahrgestells verschiebegelagert ist, wobei der zumindest annähernd bis zur vorderen Stirnwand bzw. dem Stoßfänger reichende Fahrzeugrahmen selbst an der Energieabsorption im Wesentlichen nicht beteiligt werden kann.

Die WO 2005/102825 A1 offenbart eine Tragstruktur eines Fahrerhauses für ein Nutzfahrzeug mit unterhalb einer Fahrgastzelle verlaufenden Längsträgern, wobei die Längsträger zur Aufnahme von Aufprallenergie im Falle einer Fahrzeugkollision angeordnet und ausgebildet sind. Dabei ist vorgesehen, dass die Längsträger im Bereich der Fahrzeugräder mit deformierbaren Crash-Boxen zu ihrer gezielten Verformung hinter einem Sitzbereich des Fahrers im Falle einer frontalen Fahrzeugkollision versehen sind.

Der JP 10 236342 A ist ein Fahrerhaus für ein Nutzfahrzeug als bekannt zu entnehmen, welches Längsträger umfasst, die unterhalb einer Fahrgastzelle verlaufen und bei einer unfallbedingten Kraftbeaufschlagung verformbar sind.

Die JP 10 29 7537 A beschreibt eine Fahrerhausstruktur eines Fahrerhauses für ein Nutzfahrzeug, mit einer Sitzträgeranordnung für einen Fahrzeugsitz, mit einem Sitzträger, welcher nach hinten hin an einem Energie absorbierenden Deformationselement abgestützt ist, wobei der Sitzträger als Trägerteil einer Fahrzeugstruktur am vorderen Ende des Nutzfahrzeugs ausgebildet ist. Auch aus der JP 11 170942 A geht ein Fahrerhaus für einen Nutzkraftwagen hervor, welches an Längsträgern eines Rahmens des Nutzfahrzeugs angeordnet ist.

Aufgabe der vorliegenden Erfindung ist es daher, eine Sitzträgeranordnung sowie einen Aufbau der eingangs genannten Art zu schaffen, mittels welchen sich das Verletzungsrisiko der Passagiere weiter reduzieren lässt.

Diese Aufgabe wird erfindungsgemäß durch eine Sitzträgeranordnung mit den Merkmalen des Patentanspruchs 1 sowie einen Aufbau für einen Omnibus mit des Merkmalen der Patentanspruchs 5 gelöst. Vorteilhafte Ausgestaltungen mit zweckmäßigen und nicht-trivialen Weiterbildungen der Erfindung sind in den jeweils abhängigen Patentansprüchen angegeben.

Um eine Sitzträgeranordnung für einen Fahrzeugsitz eines Omnibusses zu schaffen, mit welchem das Verletzungsrisiko des Sitzinsassen im Falle einer Frontalkollision des Omnibusses weiter reduziert werden kann, ist es erfindungsgemäß vorgesehen, dass der Sitzträger als Trägerteil einer Fahrzeugstruktur am vorderen Ende des Omnibusses ausgebildet ist. Mit anderen Worten ist es erfindungsgemäß vorgesehen, den Sitzträger in eine Fahrzeugstruktur am vorderen Ende des Omnibusses einzubinden. Hierdurch kann zunächst die Gefährdung des Sitzinsassen durch Intrusionen in die Stirnwand am vorderen Ende des Kraftfahrzeugs verringert werden, wobei sich der Fahrzeugsitz entgegen der Fahrtrichtung und unter Absorption von Energie mittels des Deformationselements im Falle einer unfallbedingten Kraftbeaufschlagung bewegen lässt. Dadurch ist es möglich, den Verlust an Überlebensraum zumindest teilweise oder größtenteils kompensieren zu können. Das Verletzungsrisiko für den Sitzinsassen lässt sich somit deutlich reduzieren.

Durch die Integration des Sitzträgers in die Fahrzeugstruktur ist es darüber hinaus möglich, auf einfache Weise eine gut abgestimmte Reststruktur zu erreichen, in welche der Sitzträger eingebunden ist. Das Gesamtsystem kann somit in vorteilhafter Weise so ausgelegt werden, dass die auf den jeweiligen Sitzinsassen im Falle einer unfallbedingten Kraftbeaufschlagung wirkenden Beschleunigungen möglichst gleichmäßig und möglichst gering gehalten werden können.

Bei Integration in die Fahrzeugstruktur kann der Sitzträger darüber hinaus als Trägerteil genutzt werden, welches im üblichen Fahrbetrieb zur Aussteifung beiträgt. Somit ergibt sich ein wesentlicher Unterschied zur Sitzträgeranordnung gemäß der DE 28 53 621 A1, bei welcher eine solche Integration nicht vorgesehen ist.

In weiterer Ausgestaltung der Erfindung hat es sich darüber hinaus als vorteilhaft gezeigt, wenn der Sitzträger bei einer unfallbedingten Kraftbeaufschlagung zumindest im Wesentlichen formstabil bleibt. Hierdurch kann für den Sitzinsassen ein hinreichender Überlebensraum gewährleistet werden, so dass dieser bei einem Frontalaufprall entsprechend geschützt werden kann.

Das Deformationselement ist in weiterer Ausgestaltung der Erfindung bevorzugt als Biege- und/oder Torsionsträger ausgebildet, da dieser auf einfache Weise elastisch-plastisch deformiert und einfach hergestellt werden kann. Darüber hinaus ergibt sich der Vorteil, dass der Deformationsverlauf eines derartigen Formationselements besonders einfach eingestellt werden kann.

Als im Weiteren vorteilhaft hat es sich gezeigt, wenn der Sitzträger eine Konsole für eine Lenksäule und/oder einen Podestrahmen für den Fahrzeugsitz aufweist. Durch das Vorsehen einer solchen Konsole kann eine steife Anbindung der Lenksäule gewährleistet werden, so dass sich das Lenkrad bei einem Frontalaufprall nur relativ geringfügig in Richtung des Fahrzeugsitzes bewegen kann.

Um des Weiteren einen hinsichtlich seiner Deformationseigenschaften verbesserten Aufbau für einen Omnibus zu schaffen, ist es erfindungsgemäß vorgesehen, dass die Fahrzeugstruktur als eine obere und eine untere Absorberebene umfassende Deformationszone ausgebildet ist. Durch eine derartige Deformationszone kann erreicht werden, dass die Bewegungsenergie des Nutzfahrzeugs bzw. des Omnibusses entsprechend so abgebaut werden kann, dass sowohl die Intrusionen als auch die auf den jeweiligen Sitzinsassen wirkenden Kräfte und Beschleunigungen entsprechend minimiert bzw. eingestellt werden können. Durch die Wahl einer unteren und einer oberen Absorberebene kann dabei eine gewünschte Aufteilung erreicht werden, wobei die obere Absorberebene beispielsweise aktiviert wird, wenn es zu einem Zusammenprall mit einem größeren bzw. höheren Fahrzeug kommt und die untere Absorberebene beispielsweise als Unterfahrschutz für kleinere bzw. niedrige Fahrzeuge dient.

Durch den erfindungsgemäßen Aufbau ist es darüber hinaus möglich, eine optimale Abstimmung der verschiebbaren Lagerung bzw. Anordnung des Sitzträgers sowie der als Crashstruktur ausgebildeten Deformationszone zueinander zu schaffen.

In weiterer Ausgestaltung der Erfindung hat es sich als zudem vorteilhaft gezeigt, dass die Deformationszone bis in einen vorderen Bereich des Grundrahmens oder Unterbaus des Omnibusses, erstreckt. Mit anderen Worten hat es sich als zudem vorteilhaft gezeigt, wenn die Deformationszone nicht nur auf die untere und obere Absorberebene der vorderen Crashstruktur begrenzt ist, sondern sich weiter nach hinten hin erstreckt. Somit kann eine besonders gut funktionierende Deformationszone
realisiert werden. Während der Sitzträger keine oder nur geringe Verformungen erfährt, können diese davor, dahinter oder daneben auftreten.

Als weiterhin vorteilhaft hat es sich gezeigt, wenn der Fahrgastraum des Omnibusses als Sicherheitsfahrgastzelle ausgebildet ist. Mit anderen Worten ist es besonders vorteilhaft, wenn der Fahrgastraum so zu gestalten ist, dass er als Sicherheitsfahrgastzelle wirkt und nur geringe Deformationen erfährt. Hindurch kann auf relativ einfache Weise ein hinreichender Überlebensraum für alle Fahrzeuginsassen gewährleistet werden.

Zudem hat es sich als vorteilhaft gezeigt, wenn der Sicherheitsfahrgastzelle zumindest Längsträger im Bereich eines Laufgangs des Omnibusses zugeordnet sind, die dementsprechend im Wesentlichen nicht deformierbar sind.

Um schließlich auch einen hinsichtlich seiner Deformationseigenschaften verbesserten Aufbau für ein Nutzfahrzeug, insbesondere einen Omnibus zu schaffen, ist es zudem erfindungsgemäß vorgesehen, dass wenigstens eine Vorderachsbrücke des Grundrahmens oder des Unterbaus im Bereich einer Vorderachse des Nutzfahrzeugs als Längendeformationselemente ausgebildet ist, welcher infolge einer unfallbedingten Kraftbeaufschlagung deformierbar ist. Während nämlich der Grundrahmen bzw. der Unterbau beim bekannten Stand der Technik im Bereich der Vorderachsaufhängung aufgrund der hohen einzuleitenden Fahrwerkskräfte üblicherweise relativ steif ausgeführt ist, wodurch bei einem Frontalanprall in diesem Bereich geringere Verformungen und hohe Beschleunigungen auftreten, ist es demgegenüber erfindungsgemäß vorgesehen, diesen Bereich des Grundrahmens bzw. Unterbaus derart zu gestalten, dass im Falle eines Unfalls bzw. einer unfallbedingten Kraftbeaufschlagung auch hier eine definierte Längsdeformation erfolgen kann. Aus diesem Grund ist es erfindungsgemäß vorgesehen, die im Bereich der Vorderachsaufhängung vorgesehenen jeweiligen seitlichen Vorderachsbrücken entsprechend deformierbar zu gestalten.

In weiterer Ausgestaltung der Erfindung ist die jeweilige Vorderachsbrücke dabei durch Faltbeulen und/oder durch Knicken/Biegen deformierbar, um hierdurch eine Längenverkürzung unter Absorption von Aufprallenergie zu erreichen.

Schließlich hat sich als zudem vorteilhaft gezeigt, wenn die Vorderachsbrücke jeweils zwei Wangen aufweist, welche infolge einer unfallbedingten Kraftbeaufschlagung deformiert werden. Durch derartige Wangen kann auf einfache Weise ein entsprechendes Deformationselement abgebildet werden.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:

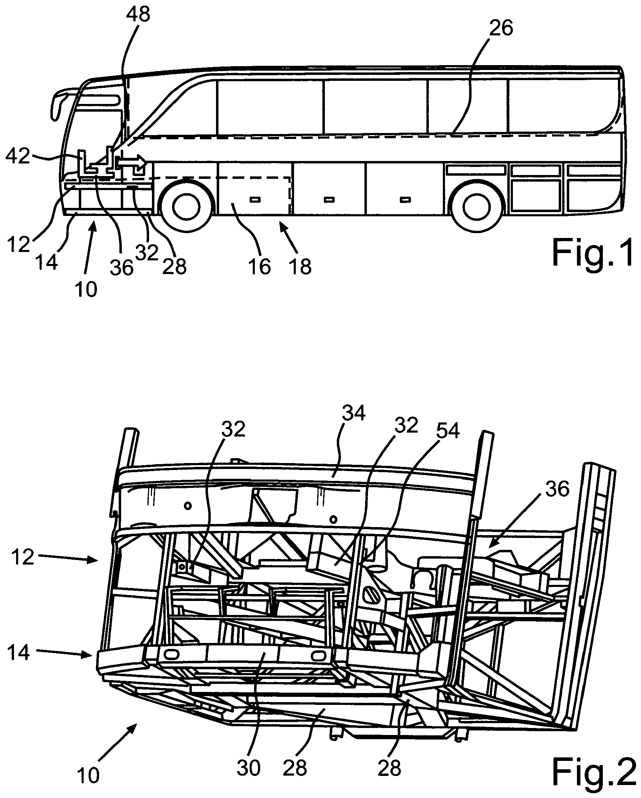

- Fig. 1: eine schematische Seitenansicht auf einen Omnibus, welcher eine vordere Fahrzeug- bzw. Crashstruktur mit einer unteren und einer oberen Absorberebene umfasst, welche einer sich bis in einen vorderen Bereich eines Grundrahmens bzw. Unterbaus des Omnibusses bzw. bis etwa über die halbe Länge des Omnibusses erstreckt, wobei im Bereich der Crashstruktur eine Sitzträgeranordnung mit einem Sitzträger erkennbar ist, welcher bei einer unfallbedingten Kraftbeaufschlagung in Folge eines Frontalaufpralls entgegen der Vorwärtsfahrtrichtung und unter Absorption von Aufprallenergie mittels eines Deformationselements nach hinten zu bewegen ist, und wobei wenigstens eine Vorderachsbrücke des Grundrahmens oder des Unterbaus als Längsdeformationselement ausgebildet ist, welches infolge einer unfallbedingten Kraftbeaufschlagung deformierbar sind;
- Fig. 2: eine schematische und ausschnittsweise Perspektivansicht von schräg vorne unten auf die vordere Fahrzeug- bzw. Crashstruktur des Omnibusses, wobei neben der unteren und oberen Absorberebne die fahrerseitige Sitzträgeranordnung erkennbar ist;
- Fig. 3: eine weitere schematische und ausschnittsweise Perspektivansicht von schräg vorne unten die vordere Fahrzeug- bzw. Crashstruktur des Omnibusses analog zu Fig. 3;
- Fig. 4: eine schematische und ausgeschnitten dargestellte Seitenansicht der Sitzträgeranordnung gemäß den Fig. 2 und 3;
- Fig. 5: jeweils eine schematische Unteransicht sowie eine perspektivische Unteransicht auf den Sitzträger der Sitzträgeranordnung in undeformiertem Zustand;
- Fig. 6: jeweils eine schematische Unteransicht und eine perspektivische Unteransicht auf den Sitzträger der Sitzträgeranordnung in deformiertem Zustand der Fahrzeug- bzw. Crashstruktur; und in
- Fig. 7: jeweils eine schematische Draufsicht auf eine der beiden als Längsdeformationselemente ausgebildeten Vorderachsbrücken des Grundrahmens oder des Unterbaus in undeformiertem und in deformiertem Zustand, welchen diese infolge einer unfallbedingten Kraftbeaufschlagung einnimmt.

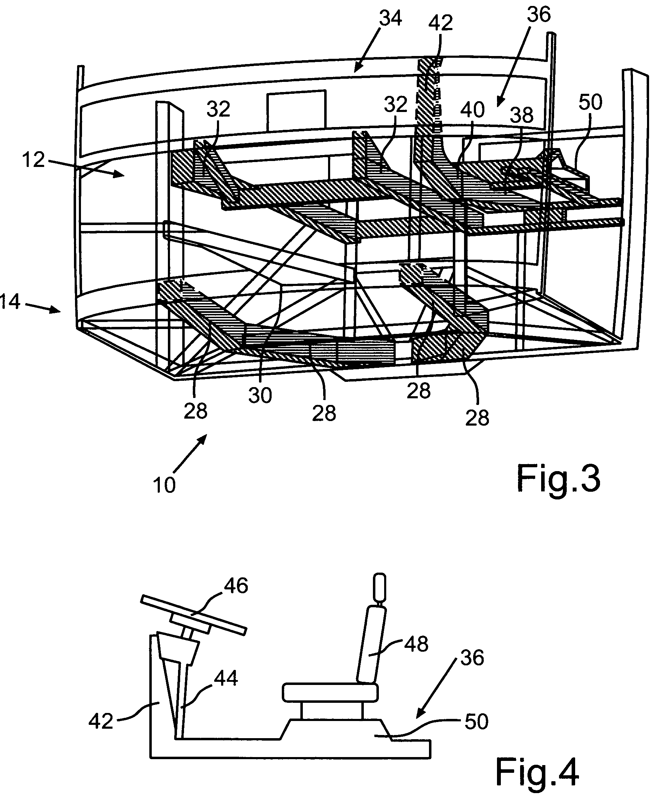

In Fig. 1 ist in einer schematischen Seitenansicht ein Omnibus dargestellt, an dessen vorderem Ende eine in Zusammenschau mit den Fig. 2 und 3 erkennbare Fahrzeugstruktur 10 in Form einer Crashstruktur vorgesehen ist, welche eine obere und eine untere Absorberebene 12, 14 umfasst. Die vordere Fahrzeugstruktur 10 bildet dabei eine Deformationszone 16, welche sich bis in den Bereich eines hinter der Fahrzeugstruktur 10 angeordneten Unterbaus 18 oder Grundrahmens des Omnibusses erstreckt. Mit anderen Worten ist vorliegend nicht nur die vordere Fahrzeugstruktur 10 als energieabsorbierende Crashstruktur ausgebildet, sondern als zumindest auch ein vorderer Bereich des Unterbaus 18. Die Deformationszone 16 ist dabei mit gestrichelten Linien angedeutet und erstreckt sich bis etwa über die halbe Länge des Omnibusses.

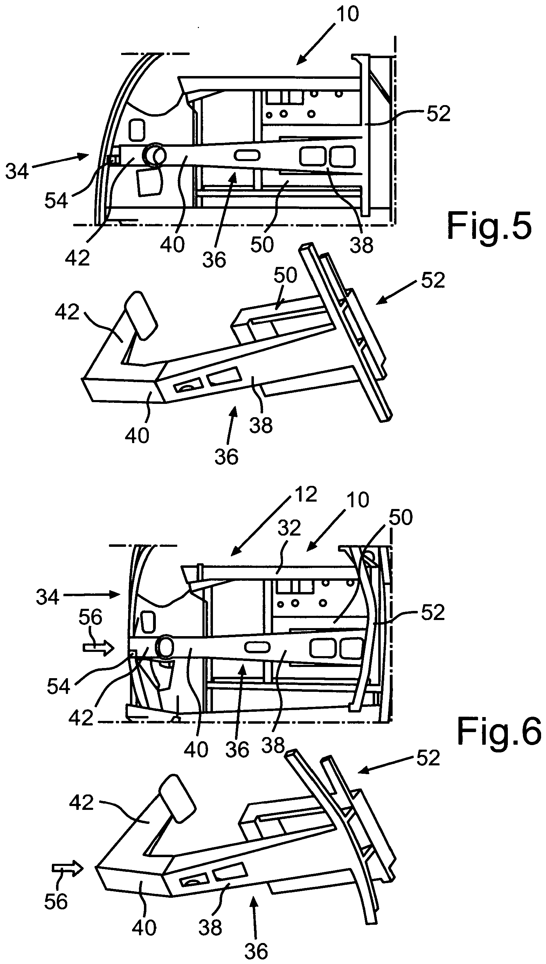

Des Weiteren ist erkennbar, dass im Bereich der vorderen Fahrzeugstruktur 10 eine im Weiteren insbesondere unter Bezugnahme auf die Fig. 4, 5 und 6 erläuterte Sitzträgeranordnung eines Sitzträgers 36 vorgesehen ist, welcher vorliegend einen als Fahrersitz ausgebildeten Fahrzeugsitz 48 trägt. Der Sitzträger 36 ist dabei über ein im Weiteren insbesondere unter Bezugnahme auf die Fig. 5 und 6 erläutertes Deformationselement nach hinten hin abgestützt und somit im Falle einer unfallbedingten Kraftbeaufschlagung in Folge eines Frontalaufpralls des Omnibusses entgegen der Vorwärtsfahrtrichtung - wie mit dem Pfeil 24 in Fig. 1 angedeutet - verschiebbar. Der Fahrgastraum des Omnibusses ist - wie durch die gestrichelte Linie 26 angedeutet - im vorliegenden Fall als Sicherheitsfahrgastzelle ausgebildet, welche bei einem Aufprall, insbesondere einem Frontalaufprall, lediglich eine geringe Deformation erfährt. Dies kann beispielsweise dadurch erreicht werden, dass der Sicherheitsfahrgastzelle zumindest Längsträger im Bereich eines mittleren Laufgangs des Omnibusses zugeordnet sind.

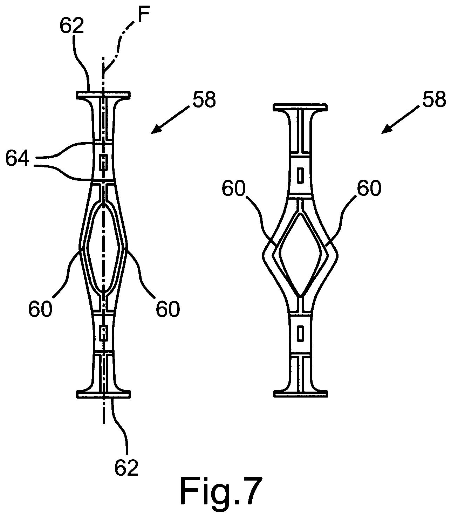

Schließlich ist aus Fig. 1 erkennbar, dass der Grundrahmen bzw. Unterbau 18 im Bereich der Vorderachsaufhängung wenigstens eine Vorderachsbrücke 58 umfasst, deren konkrete Ausgestaltung insbesondere im Zusammenhang mit Fig. 7 noch näher erläutert werden wird. Dabei wird der Bereich des Unterbaus 18, an dem die unteren Querlenker der Vorderachsaufhängung befestigt sind, als jeweilige Vorderachsbrücke 58 benannt. Die Vorderachsbrücke 58 ist dabei vorliegend beispielsweise in die korrespondierenden Rahmenträger des Grundrahmens bzw. Unterbaus 18 eingebunden. Aus den Fig. 2 und 3, welche die vordere Fahrzeugstruktur 10 ausschnittsweise und in einer schematischen Perspektivansicht von schräg vorne unten zeigen, werden die obere und die untere Absorberebene 12, 14 erkennbar. Die untere Absorberebene 14 umfasst dabei eine Mehrzahl von winkelig zueinander angeordneten Trägern 28, welche nach vorne hin an einen Querträger 30 anschließen. Die untere Absorberebene 14 dient demzufolge insbesondere als Unterfahrschutz bei einer Frontalkollision mit kleineren und niedrigeren Fahrzeugen wie Personenkraftwagen. Die obere Absorberebene 12 umfasst ebenfalls eine Mehrzahl von ebenfalls winkelig zueinander angeordneten Trägern 32, welche im Höhenabstand zu den Trägern 28 der unteren Absorberebene 14 angeordnet sind. Die obere Absorberebene 12 wird dabei insbesondere bei einer Kollision mit höher aufgebauten Fahrzeugen (SUV, Kleintransporter, Nutzkraftwagen) angesprochen. Aus den Fig. 2 und 3 ist darüber hinaus das vordere Ende 34 der Fahrzeugstruktur 10 erkennbar, entlang welcher sich eine nicht dargestellte vordere Stirnwand des Omnibusses erstreckt. Die eingesetzten Träger 28 bzw. 32 sind vorliegend als Längsträger ausgebildet, die im Kollisionsfall durch Faltenbeulen versagen. Anstelle einer Ausgestaltung, bei welcher ein Versagen durch Faltbeulen auftritt, können die Träger 28 bzw. 32 auch andersartig zur Energieabsorption ausgebildet sein. Im vorliegenden Fall ist es zudem vorteilhaft, dass die Deformationszone 16 sich nicht auf den Bereich der Absorberebenen 14 beschränkt, sondern dass auch der Grundrahmen bzw. Unterbau 18 dahinter gezielt verformbar ist.

In ebensolcher Weise können die dahinter angeordneten Längsträger der Deformationszone 16 (Fig. 1) gestaltet sein, um ein noch verbessertes Energieabsorptionsvermögen des Omnibusses bereitstellen zu können. Es ist klar, dass als alternative Varianten für die Absorberebenen 12, 14 nicht nur als Längsträger ausgebildete Träger 28, 32 eingesetzt werden können, sondern grundsätzlich alle energieabsorbierenden Bauweisen denkbar sind. Insgesamt ist somit erkennbar, dass vorliegend eine Fahrzeugstruktur 10 geschaffen ist, die in der Lage ist, die Bewegungsenergie des Fahrzeugs so abzubauen, dass sowohl die Intrusionen als auch die auf die Sitzinsassen wirkenden Beschleunigungen minimiert werden.

Darüber hinaus ist in den Fig. 2 und 3 eine fahrerseitige Sitzträgeranordnung erkennbar, welche insbesondere in Zusammenschau mit den weiteren Figuren 4 bis 6 erläutert werden soll. Hierzu zeigt Fig. 4 eine schematische und ausschnittsweise Seitenansicht auf die Sitzträgeranordnung. Die Figuren 5 und 6 zeigen in jeweils einer schematischen Unteransicht und jeweils einer perspektivischen Unteransicht die Sitzträgeranordnung bzw. einen Sitzträger 36 vor bzw. nach einer unfallbedingten Kraftbeaufschlagung der vorderen Fahrzeugstruktur 10 infolge einer Frontalkollision des Omnibusses.

In Zusammenschau der Fig. 4 bis 6 ist zunächst erkennbar, dass der Sitzträger 36 zwei miteinander verbundene Trägerteile 38, 40 umfasst, welche leicht winklig miteinander verbunden sind. Insgesamt erstrecken sich die beiden Trägerteile 38, 40 des Sitzträgers 36 in Fahrzeuglängsrichtung (x-Richtung). Darüber hinaus umfasst der Sitzträger 36 eine Konsole 42 für eine Lenksäule 44, welche sich im Wesentlichen in Fahrzeughochrichtung (z- Richtung) erstreckt und fest mit den Trägerteilen 38, 40 verbunden ist. Die steife Anbindung der Konsole 42 bzw. der Lenksäule 44 an dem Sitzträger 36 gewährleistet, dass sich ein Lenkrad 46 bei einem Frontalaufprall nur gering in Richtung des Fahrzeugsitzes 48 bewegen kann. Der Fahrzeugsitz 48 ist durch einen Podestrahmen 50 getragen, welcher unter Vermittlung eines Biege- und/oder Torsionsträgers 52 mit den Trägerteilen 38, 40 des Sitzträgers 36 verbunden ist.

Der Sitzträger 36 ist - wie insbesondere aus den Fig. 2, 3 und 5 erkennbar wird - als Trägerteil in die Fahrzeugstruktur 10 integriert. Mit anderen Worten übernimmt der Sitzträger 36 mithin auch eine Tragfunktion für die Crashstruktur. An seinem vorderen Ende ist der Sitzträger 36 dabei im Bereich eines in Vertikalrichtung verlaufenden Profils 54 festgelegt. Nach hinten hin ist der Sitzträger 36 über den Biege- und/oder Torsionsträger 52 am hinteren Ende der Fahrzeugstruktur 10 abgestützt. Dabei erstreckt sich der Sitzträger 36 etwa auf Höhe der oberen Absorberebene 12. Somit ist erkennbar, dass vorliegend ein einfach ausgestalteter Sitzträger 36 geschaffen ist, welcher auf äußerst einfache Weise in die Fahrzeugstruktur integriert ist und zu deren Aussteifung beiträgt.

Insbesondere aus Fig. 6 ist erkennbar, in welche Weise sich die Fahrzeugstruktur 10 bzw. der Sitzträger 36 bei einer unfallbedingten Kraftbeaufschlagung (Pfeil 56) infolge eines Frontalaufpralls des Omnibusses verhält. Dabei wird insbesondere erkennbar, dass der Sitzträger 36 bzw. dessen Trägerteile 38, 40 im Wesentlichen undeformiert bzw. formstabil verbleiben. Durch die unfallbedingte Kraftbeaufschlagung wird der Biege- und/oder Torsionsträger 52 aus seiner in Fig. 5 gezeigten Form in die in Fig. 6 gezeigte Form deformiert. Mit anderen Worten ist vorliegend eine verschiebbare Lagerung bzw. Verschiebung des Sitzträgers 36 erfolgt, wobei dieser durch den verformbaren Biege- und/oder Torsionsträger 52 in der Fahrzeugstruktur 10 gelagert, bzw. gehalten ist. Die beim Aufprall auf den Sitzträger 36 bzw. die Trägerteile 38, 40 wirkenden Kräfte führen zu elastisch-plastischer Deformation der Bauteile des Biege- und/oder Torsionsträgers 52. Dabei wird die Längsverschiebung des Sitzträgers 36 durch die Überlagerung von Biegung und Torsion des als Rechteckprofils ausgebildeten Biege- und/oder Torsionsträgers 52 realisiert. Mögliche Varianten sind jedoch auch Längsverschiebungen, die sich aus reiner Biegung oder aus einer Torsion ergeben.

Die Fahrzeugstruktur 10 bzw. die Sitzträgeranordnung des Sitzträgers 36 ist so ausgeführt, dass dessen Beschleunigungsverlauf sich günstig auf die biomechanische Belastung des Sitzinsassen auswirkt. Tritt während des Verschiebevorgangs der Sitzträger 36 in Kontakt mit benachbarten Strukturen oder Bauteilen, kann deren Kraftverschiebungsverhalten gleichermaßen zur Beeinflussung des Beschleunigungsverlaufs eingesetzt werden. Darüber hinaus sind die verformbaren Elemente so zu dimensionieren, dass alle im normalen Fahrbetrieb auftretenden Belastungen zu keiner gewollten Verschiebung bzw. Verlagerung des Sitzträgers 36 führen. Mithin trägt der Sitzträger 36 dann zur Aussteifung der Fahrzeugstruktur bei.

Aus Fig. 6 ist zudem ersichtlich, dass durch die steife Anordnung der Konsole 42 bzw. der Längssäule 44 ein Überlebensraum für den Sitzinsassen zwischen dem Lenkrad 46 und dem Fahrzeugsitz 48 zu gewährleisten ist.

Somit ist es mit der erfindungsgemäßen Sitzträgeranordnung möglich, einer im Bereich der vorderen Stirnwand des Omnibusses auftretenden Intrusion dadurch entgegen zu wirken, dass der Sitzträger 36 entsprechend nach hinten - unter Absorption von Aufprallenergie - verschoben werden kann. Gleichfalls wird durch die Fahrzeugstruktur 10 bzw. die Absorberebenen 12 und 14 eine Absorption der Aufprallenergie erreicht. Durch eine geeignete Abstimmung der Lage, Geometrie und Verformungseigenschaften der beschriebenen Bauteile wird dabei gewährleistet, dass die auf den Sitzinsassen wirkenden Beschleunigungen nicht übermäßig hoch werden.

Dem Fahrzeugsitz 48 kann vorliegend insbesondere ein nicht dargestellter 3-Punkt-Gurt zugeordnet sein, wobei alle Gurtverankerungspunkte am Fahrzeugsitz 48 bzw. dem Sitzträger 36 befestigt sind.

Insgesamt ist somit ersichtlich, dass insbesondere auch durch den Biege- und/oder Torsionsträger 52 ein einfaches System geschaffen ist, welches rein mechanisch funktioniert und dessen Störanfälligkeit auf ein Minimum reduziert ist. Als im Rahmen der Erfindung mitumfasst ist es zu betrachten, dass anstelle des hier vorgesehenen Fahrersitzes auch ein Beifahrersitz mit einer entsprechenden Sitzträgeranordnung versehen sein kann. Gleichfalls als im Rahmen der Erfindung mitumfasst ist es zu betrachten, dass die verwendete Sitzträgeranordnung bzw. der beschriebene Aufbau des Omnibusses auch bei einem Frontlenkerfahrzeug zum Einsatz kommen kann.

Der gesamte Aufbau des Omnibusses zeichnet sich dabei insbesondere dadurch aus, dass nicht nur die vorderen Sitzinsassen nahe der vorderen Stirnwand entsprechend geschützt sind, sondern auch die innerhalb der Fahrgastzelle sitzenden Passagiere.

In Fig. 7 ist jeweils einer schematischen Draufsicht die als Längsdeformationselement ausgebildete Vorderachsbrücke 58 dargestellt, welches als Teil des Grundrahmens bzw. Unterbaus 18 bzw. in jeweilige Rahmenträger integriert und links in undeformiertem und rechts in deformiertem Zustand gezeigt ist, welchen dieses in Folge einer unfallbedingten Kraftbeaufschlagung einnimmt. Dabei ist erkennbar, dass die Vorderachsbrücke 58 zwei Flansche 62 umfasst, mittels welcher diese in den Grundrahmen bzw. Unterbau 18 eingebaut werden kann. Des Weiteren ist erkennbar, dass die Vorderachsbrücke zwei Wangen 60 umfasst, welche eine im Wesentlichen O-förmige Öffnung einschließen. In Zusammenschau der beiden Darstellungen gemäß Fig. 7 ist erkennbar, dass die Wangen 60 in Folge einer unfallbedingten Kraftbeaufschlagung - unter Energieabsorption - deformierbar sind. Eine solche Deformation kann vorliegend durch Faltbeulen der axial belasteten Tragelemente des Unterbaus und/oder durch Knicken/Biegen der Tragelemente des Unterbaus - im vorliegenden Fall insbesondere der Wangen 60 - erfolgen. Somit wird erreicht, dass der bislang üblicherweise aufgrund der einzuleitenden Fahrwerkskräfte relativ steife Bereich des Grundrahmens bzw. Unterbaus 18 nun zur Längendeformation herangezogen werden kann. Die Wangen 60 werden dabei beim Überschreiten einer gewissen Längskraft zum Faltbeulen oder Knicken/Biegen veranlasst. Dies wird vorliegend dadurch erreicht, dass die Wangen 60 bereits im normalen Zustand eine Krümmung besitzen. Die Funktionsfähigkeit der Vorderachsbrücke 58 ist dabei im normalen Fahrbetrieb - also bei nicht deformierter Vorderachsbrücke 58 - nicht beeinträchtigt.

Es ist erkennbar, dass somit die Verformung und Energieabsorption gleichmäßig über die gesamte Deformationszone 16 verteilt werden kann. Es ergibt sich hierdurch eine Begrenzung der Beschleunigungswerte für die Insassen wie eine Begrenzung der Verformung im Falle eines Frontalaufpralls auf einen kleineren Bereich, was sich insbesondere hinsichtlich der Reparaturkosten besonders vorteilhaft auswirkt.

Schließlich sind in Fig. 7 Befestigungspunkte 64 für untere Querlenker erkennbar. Mit der strichpunktierten Linie F ist zudem die Fahrzeugmitte angedeutet.

## Patentansprüche

1. Sitzträgeranordnung für einen Fahrzeugsitz (48) eines Omnibusses, mit einem Sitzträger (36), welcher nach hinten hin an einem Energie absorbierenden Deformationselement (52) abgestützt ist, wobei der Sitzträger (36) als Trägerteil einer Fahrzeugstruktur (10) am vorderen Ende des Omnibusses ausgebildet ist, **dadurch gekennzeichnet, dass** die Fahrzeugstruktur (10) eine obere und eine untere Absorberebene (12, 14) umfasst, welche jeweils Längsträger (28, 32) eines Grundrahmens des Omnibusses aufweist.

2. Sitzträgeranordnung nach Anspruch 1,
**dadurch gekennzeichnet,**
**dass** der Sitzträger (36) bei einer unfallbedingten Kraftbeaufschlagung zumindest im Wesentlichen formstabil bleibt.

3. Sitzträgeranordnung nach Anspruch 1 oder 2,
**dadurch gekennzeichnet,**
**dass** das Deformationselement als Biege- und/oder Torsionsträger (52) ausgebildet ist.

4. Sitzträgeranordnung nach einem der Ansprüche 1 bis 3,
**dadurch gekennzeichnet,**
**dass** der Sitzträger (36) eine Konsole (42) für eine Lenksäule (44) und/oder einen Podestrahmen (50) für den Fahrzeugsitz (48) aufweist.

5. Aufbau für einen Omnibus, mit einer vor einem Grundrahmen oder Unterbau (18) angeordneten Fahrzeugstruktur (10),
**dadurch gekennzeichnet,**
**dass** die Fahrzeugstruktur (10) als eine obere und eine untere Absorberebene (12, 14) umfassende Deformationszone (16) ausgebildet ist und eine Sitzträgeranordnung nach einem der Ansprüche 1 bis 4 aufweist.

6. Aufbau nach Anspruch 5,
**dadurch gekennzeichnet,**
**dass** sich die Deformationszone (16) bis in einen vorderen Bereich des Grundrahmens oder Unterbaus (18) des Omnibusses erstreckt.

7. Aufbau nach Anspruch 5 oder 6,
**dadurch gekennzeichnet**
**dass** der Fahrgastrahmen des Omnibusses als Sicherheitsfahrgastzelle ausgebildet ist.

8. Aufbau nach Anspruch 7,
**dadurch gekennzeichnet**
**dass** der Sicherheitsfahrgastzelle zumindest Längsträger im Bereich eines Laufgangs des Omnibusses zugeordnet sind.

## Claims

1. Seat carrier arrangement for a vehicle seat (48) of a bus, having a seat carrier (36), which is supported towards the rear on an energy-absorbing deformation element (52),
wherein the seat carrier (36) is formed as a carrier part of a vehicle structure (10) at the front end of the bus,
**characterised in that**
the vehicle structure (10) has an upper and a lower absorber plane (12, 14),
each having longitudinal beams (28, 32) of a base frame of the bus.

2. Seat carrier arrangement according to claim 1,
**characterised in that**
the seat carrier (36) at least essentially retains its shape following an impact of force due to an accident.

3. Seat carrier arrangement according to claim 1 or 2,
**characterised in that**
the deformation element is formed as a bending and / or torsion beam (52).

4. Seat carrier arrangement according to one of claims 1 to 3,
**characterised in that**
the seat carrier (36) has a bracket (42) for a steering column (44) and / or a platform frame (50) for the vehicle seat (48).

5. Construction for a bus, having a vehicle structure (10) arranged in front of a base frame or substructure (18),
**characterised in that**
the vehicle structure (10) is formed as a deformation zone (16) having an upper and a lower absorber plane (12, 14) and it has a seat carrier arrangement according to one of claims 1 to 4.

6. Construction according to claim 5,
**characterised in that**
the deformation zone (16) extends into a front region of the base frame or substructure (18) of the bus.

7. Construction according to claim 5 or 6,
**characterised in that**
the passenger frame of the bus is formed as a passenger safety cell.

8. Construction according to claim 7,
**characterised in that**
at least longitudinal beams in the region of a gangway of the bus are assigned to the passenger safety cell.

## Revendications

1. Agencement de support de siège pour un siège (48) d'un autobus, comprenant un support (36) de siège qui repose vers l'arrière sur un élément (52) de déformation d'absorption d'énergie, le support (36) de siège étant conçu comme partie de support d'une structure (10) de véhicule sur l'extrémité avant de l'autobus, **caractérisé en ce que** la structure (10) de véhicule comprend un plan d'absorption supérieur et inférieur (12, 14), dont chacun comprend des longerons (28, 32) d'un châssis de base de l'autobus.

2. Agencement de support de siège selon la revendication 1, **caractérisé en ce que** le support (36) de siège demeure indéformable au moins sensiblement en cas d'application d'une force consécutive à un accident.

3. Agencement de support de siège selon la revendication 1 ou la revendication 2, **caractérisé en ce que** l'élément de déformation est conçu comme un support (52) de torsion et/ou de flexion.

4. Agencement de support de siège selon l'une quelconque des revendications 1 à 3, **caractérisé en ce que** le support (36) de siège présente une console (42) pour une colonne de direction (44) et/ou un cadre (50) de socle pour le siège (48) de véhicule.

5. Carrosserie d'un autobus comprenant une structure (10) de véhicule disposée avant un châssis de base ou un soubassement (18), **caractérisée en ce que** la structure (10) de véhicule est conçue comme une zone (16) de déformation comprenant un plan d'absorption supérieur et inférieur (12, 14) et présente un agencement de support de siège selon l'une quelconque des revendications 1 à 4.

6. Carrosserie selon la revendication 5, **caractérisée en ce que** la zone (16) de déformation s'étend jusque dans une zone avant du châssis de base ou du soubassement (18) de l'autobus.

7. Carrosserie selon la revendication 5 ou la revendication 6, **caractérisée en ce que** le châssis de passager de l'autobus est conçu comme une cellule de sécurité de passager.

8. Carrosserie selon la revendication 7, **caractérisée en ce qu'**au moins des longerons dans la zone d'un couloir de circulation de l'autobus sont associés à la cellule de sécurité de passager.
